Europäisches Patentamt

(19) European Patent Office

Office européen des brevets

(11) Publication number: **0 129 055**
**A2**

# (12) EUROPEAN PATENT APPLICATION

(21) Application number: **84105484.4**

(22) Date of filing: **15.05.84**

(51) Int. Cl.³: **G 11 B 15/02**
**G 11 B 15/18, G 11 B 27/10**
**H 04 N 5/783**

(30) Priority: **20.06.83 JP 109279/83**

(43) Date of publication of application:
**27.12.84 Bulletin 84/52**

(84) Designated Contracting States:
**DE FR GB IT**

(71) Applicant: **HITACHI, LTD.**
**6, Kanda Surugadai 4-chome Chiyoda-ku**
**Tokyo 100(JP)**

(72) Inventor: **Okamoto, Kaneyuki**
**Tabiko-ryo 391-2, Tabiko**
**Katsuta-shi Ibaraki-ken(JP)**

(72) Inventor: **Kobori, Yasunori**
**Yoshida Apart 212, 594 Yoshida-cho Totsuka-ku**
**Yokohama-shi Kanagawa-ken(JP)**

(72) Inventor: **Sekiya, Masataka**
**1-5-1, Hakamatsuka**
**Mito-shi Ibaraki-ken(JP)**

(72) Inventor: **Fukushima, Isao**
**828-17, Ichige**
**Katsuka-shi Ibaraki-ken(JP)**

(72) Inventor: **Kano, Kenji**
**1322-39, 3-chome, Miwa**
**Mito-shi Ibaraki-ken(JP)**

(72) Inventor: **Kubota, Takashi**
**192-127, Sumiyoshi-cho**
**Mito-shi Ibaraki-ken(JP)**

(74) Representative: **Altenburg, Udo, Dipl.-Phys. et al,**
**Patent- und Rechtsanwälte**
**Bardehle-Pagenberg-Dost-Altenburg & Partner Postfach**
**86 06 20**
**D-8000 München 86(DE)**

(54) **Method and apparatus for controlling a still reproduction of a video tape recorder.**

(57) A method and apparatus for reproducing a still picture without a noise bar from a magnetic tape in a video tape recoder. The magnetic tape is stopped in a moment at a leading edge of a rotating phase detecting signal of rotating heads or a reproduced control signal generated after a still reproduction command signal, and it is detected whether the nose bar exists within a vertical blanking period or not in a still reproduction state. If the noise bar exists within the vertical blanking period, the still reproduction state is continued. In the case that the noise bar does not exist within the vertical blanking period, the magnetic tape is run at a slow speed, and when the noise bar gets into the vertical blanking period, the feeding of the magnetic tape is stopped.

./...

Croydon Printing Company Ltd.

**FIG. 3**

Hitachi, Ltd.

August 8, 1984
H 5487-EP    Al/Sch

Method and Apparatus for Controlling a Still Reproduction
of a Video Tape Recorder

Background of the Invention

This invention relates to a method and an apparatus for reproducing a video signal from a magnetic tape, especially a method and an apparatus for a still reproduction without a noise bar in a picture in a helical scan type video tape recorder.

In the helical scan type video tape recorder, as is known well, the still reproduction can be performed by repeatedly reproducing one of the pictures recorded on the magnetic tape by rotating heads in a stop state of feeding the magnetic tape. In this case, however, the noise bar appears in the reproduced picture according to circumstances in which a stop position of the magnetic tape is not suitable. If the magnetic tape is stopped at a switchable position, the noise bar does not appear in the reproduced picture. Therefore, generally in the prior art, a control apparatus for the still reproduction, which is used for stopping the magnetic tape at the suitable position during a still reproduction mode, is attached to the helical scan type video tape recorder (hereinafter VTR).

Usually, in the VTR using the control apparatus, the feeding of the magnetic tape is stopped in response to an occurrence of the first one of rotating phase detecting signals (hereinafter RPD signals) or control signals (hereinafter CTL signals) reproduced from the magnetic tape after a command for the still reproduction is supplied, and rapidly shifted to the stop state in which the noise bar may not appear.

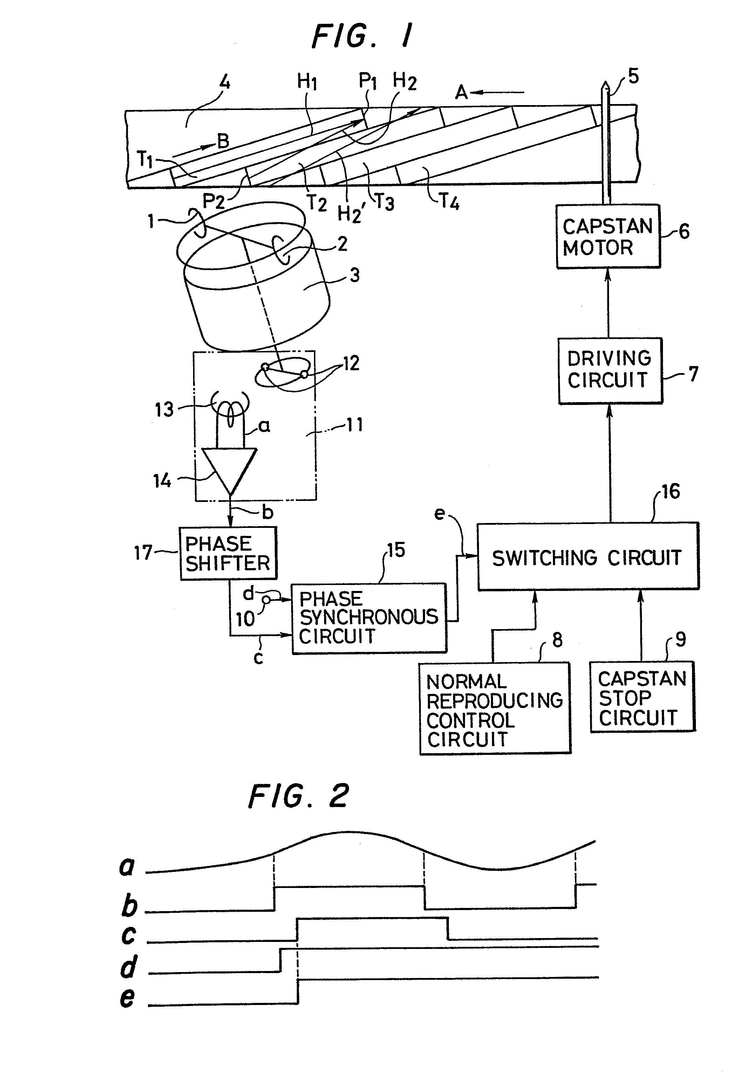

Fig. 1 shows a block diagram of one example of the control apparatus for the VTR. The numerals 1 and 2 denote the rotating heads attached to a rotating drum designated by the numeral 3. The numerals 4, 5, 6 and 7 denote the magnetic tape, a capstan, a capstan motor and a driving circuit, respectively.

The numerals 8 and 9 designate a normal reproducing control circuit and a capstan stop circuit, respectively.

The numeral 10 denotes an input terminal of a command signal $d$ for the still reproduction. A rotating phase detector 11 is constructed by magnets 12 which are rotating together with the magnetic heads 1 and 2, a tacho head 13 which detects a signal $a$ shown in Fig. 2 indicating a rotating phase of the rotating drum 3, that is, the rotating heads 1 and 2 and an amplifier 14 which amplifies and shapes the signal $a$ and supplies the RPD signal $b$ shown in Fig. 2. The RPD signal $b$ is delayed a fixed period by a phase shifter 17 and supplied to a phase synchronous circuit 15 as a timing signal $c$ shown in Fig. 2.

The phase synchronous circuit 15, which is constructed by a D type flip flop circuit, discriminates a level of the command signal $d$ shown in Fig. 2 at the leading edge of the timing signal $c$. If the command signal $d$ is high level (hereinafter "H") and the timing signal $c$ is not supplied, an output signal $e$ of the phase synchronous circuit 15 is low level (hereinafter "L"). If the command signal $d$ is "H" and the timing signal $c$ is supplied, the output signal $e$ becomes "H". In the case that the output signal $e$ is "L", a switching circuit 16 connects the normal reproducing control circuit 8 with the driving circuit 7 so that the capstan 5 rotates and the magnetic tape 4 constantly moves to the direction of an arrow A. On the contrary, in the case that the output signal $e$ is "H", a switching circuit 16 connects the capstan stop circuit 9 with the driving circuit 7 so that the feeding of the magnetic tape is stopped.

The rotating heads 1 and 2, during the normal reproduction mode, moves to the direction of an arrow B on the magnetic tape 4 and alternately and sequentially scans tracks $T_1$, $T_2$, $T_3$, $T_4$ --- recorded on the magnetic tape 4. In this reproducing state, as the still reproduction mode is set, the command signal $d$ is supplied to the input terminal 10 so that the phase synchronous circuit 15 detects the command signal $d$ at the leading edge of the timing signal $c$. Therefore, the output signal $e$ becomes "H" at the leading edge of the first pulse of the timing signal $c$ after the command signal $d$ is supplied, and at the same time the feeding of the magnetic tape is stopped by the switching circuit 16. The magnetic tape 4 is stopping during the output signal $e$ is held "H".

Meanwhile, as mentioned above, the rotating heads 1 and 2 are accurately tracking the tracks $T_1$, $T_2$, $T_3$, $T_4$ --- on the magnetic tape during the normal reproduction mode.

The tracking, as is known well in the prior art, is executed by controlling a rotating phase of the drum motor 3 in the manner that the RPD signals $b$ are synchronized with the CTL signals. Therefore, the RPD signals $b$ represent timings in which the rotating heads 1 and 2 are positioned to the edges of the tracks. That is to say, at the timings of the leading edges of the RPD signals, the rotating head 1 or 2 accurately coincides with one of the edges of the tracks $T_1$, $T_2$, $T_3$, $T_4$ --. Then, when the exchange from the normal reproduction mode to the still reproduction mode is made by using the RPD signal $b$, and the magnetic tape is stopped at the leading edge of the RPD signal $b$, the rotating heads 1 and 2 repeatedly scan one of the tracks as the rotating heads 1 and 2 accurately coincide with one edge of the track.

Now, the magnetic tape 4 is stopped at the leading edge of the RPD signal $\underline{b}$ which is generated at the timing in which the rotating head 1 reaches the end edge $P_1$ of the track $T_1$ after scanning the track $T_1$ as the trace $H_1$ shown in Fig. 1 in the normal reproduction mode. The traces of the rotating heads 2 and 1 accurately coincide with the track $T_1$ at the start edge $P_2$ of the track $T_2$. However, after that, the rotating heads 2 and 1 gradually go away from the track $T_2$ and finally trace the end edge $P_1$ of the track $T_1$, as the trace $H_2$ shown in Fig. 1.

Further, by delaying the timing of stopping the magnetic tape from the leading edge of the RPD signal $\underline{b}$, it is possible to shift an accurate trace point from the start edge $P_2$ to the end edge $P_1$.

Therefore, it is also possible to make the accurate trace point of the rotating heads 1 and 2 located on the longitudinal center of the track, and as a result, the start edge and the end edge become the points on which the rotating heads 1 and 2 are maximum apart from the track. Therefore, the noise bars enter into the vertical blanking periods so that the noise bars do not appear in the reproduced still pictures.

The phase shifter 17 shown in Fig. 1 is used for delaying the RPD signals $\underline{b}$ and determining the stop timing of the magnetic tape in the manner that the rotating heads 1 and 2 coincide with the track at the longitudinal center of the track. The amount of the phase shifting of the phase shifter 17 is, if the capstan motor 6 does not have an inertial moment, equal to a half of the period of the RPD signal $\underline{b}$, but in consideration of the inertial moment, the amount is set to a little shorter than the half thereof.

Therefore, in principle, the rotating heads 1 and 2 may accurately scan the tracks in a best condition and the still reproduction without the noise bar may be obtained. However, in fact, although the stop timing of the magnetic tape 4 is set in consideration of the inertial moment, it is very difficult to stop the magnetic tape 4 at a proper position due to some causes, for example, a high speed of the magnetic tape during the normal reproduction mode. As a result, in some cases the magnetic tape 4 passes through the proper position and the noise bar appears in the still reproduction picture.

## SUMMARY OF THE INVENTION

Accordingly, it is an object of the present invention to provide a method and an apparatus for a still reproduction picture without a noise bar from a magnetic tape.

It is another object of the present invention to provide a method and an apparatus for obtaining a still reproduction picture in a moment after a still reproduction command.

Briefly, to attain the above mentioned objects, according to the present invention, the magnetic tape is rapidly stopped in response to a rotating phase signal of the rotating heads after the command signal for the still reproduction is supplied, and whether the noise bar exists within the vertical blanking periods or not is detected. Then, the still reproduction is continued in the stop state in the case that the noise bar exists within the vertical blanking periods.

In the case that the noise bar does not exist within the vertical blanking periods, the magnetic tape is run at a slow speed and is stopped when the noise bar gets into the vertical blanking period. As the feeding of the magnetic tape is exchanged from the slow speed state to the stop state, the magnetic tape can be stopped in a moment, so that the noise bar always gets into the vertical blanking periods and it becomes possible to always obtain a still reproduction picture without the noise bar. As the rotating phase signal, the RPD signals or the CTL signals are used, and especially the leading edge of the first one of the RPD signals or the CTL signals is used. Further, according to the present invention, an apparatus for executing the above mentioned method is offered as described in detail hereinafter.

## BRIEF DESCRIPTION OF THE DRAWINGS

Fig. 1 is a block diagram representation of an apparatus for reproducing a video signal in the still reproduction mode according to the prior art,

Fig. 2 illustrates waveforms of signals in accordance with Fig. 1,

Fig. 3 is a block diagram representation of an apparatus for reproducing a video signal in the still reproduction mode according to an embodiment of the present invention, and

Fig. 4 illustrates waveforms of signals in accordance with Fig. 3.

## DETAILED DESCRIPTION OF THE PREFERRED EMBODIMENTS

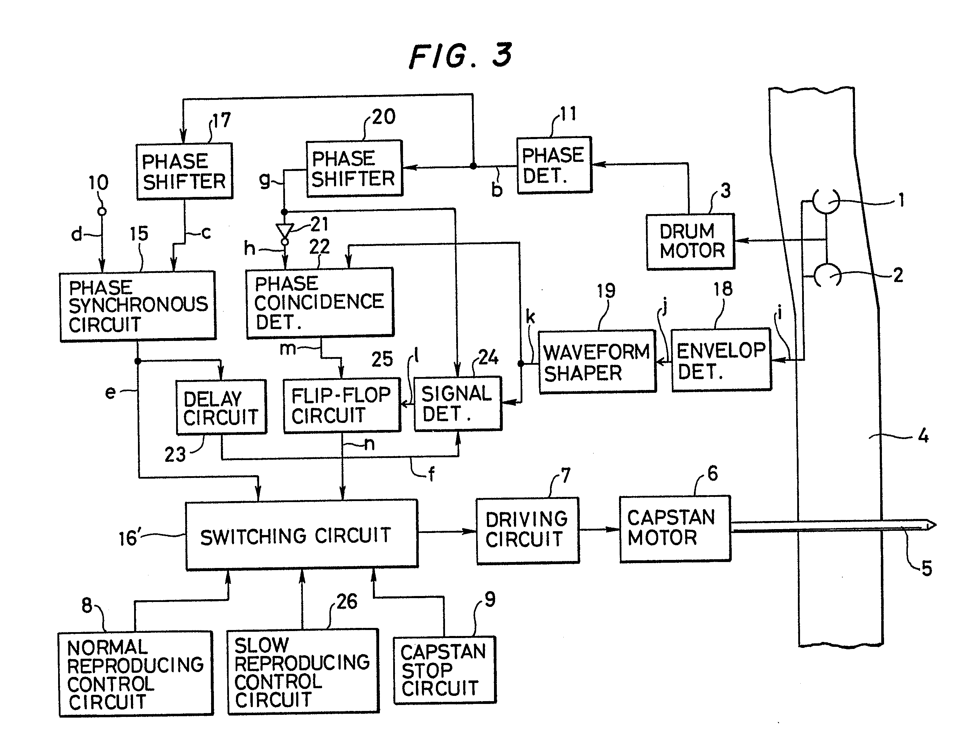

Referring to Fig. 3, the apparatus of the present invention includes the rotating heads 1 and 2 to the phase synchronous circuit 15 and the phase shifter 17 shown in Fig. 1. Further, the numerals 18 and 19 denote an envelop detector and a waveform shaper, respectively. The numerals 20, 21 and 22 designate a phase shifter, an inverter and a phase coincidence detector, respectively. The numerals 23, 24, 25 and 26 denote a delay circuit, a signal detector, a flip flop circuit and a slow reproducing control circuit, respectively.

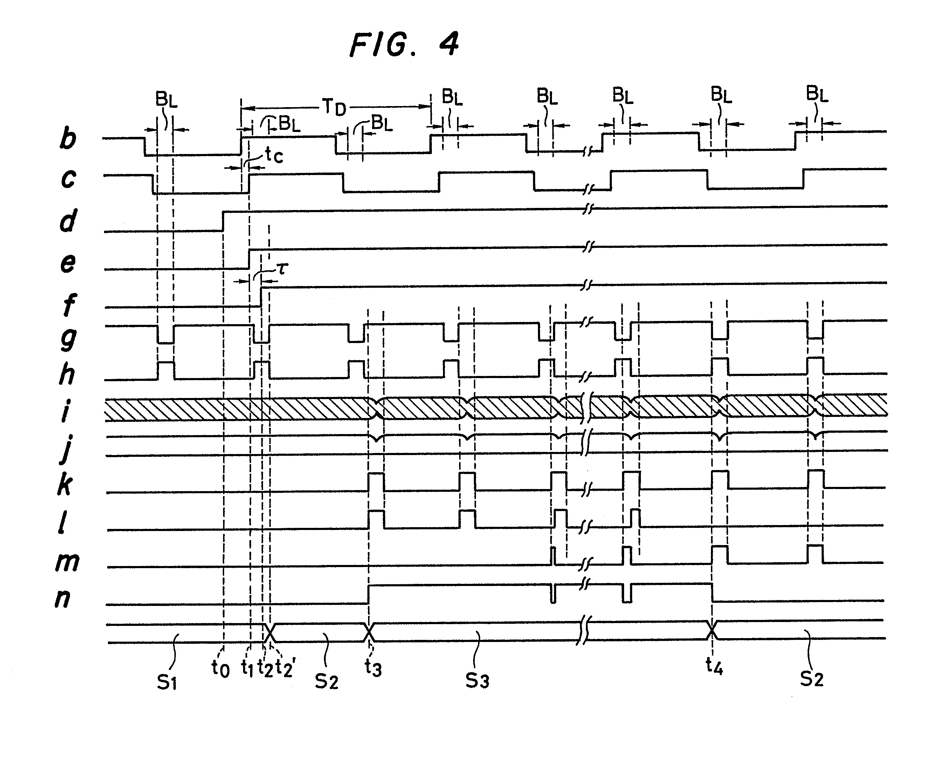

The phase shifter 20 generates vertical blanking period pulses $g$ (hereinafter VBP pulses $g$), which are pulse signals having the same timing of the vertical blanking periods. As shown in Fig. 4, the VBP pulses $g$ are "L" during the vertical blanking periods. The VBP pulses $g$ are supplied to the signal detector 24 and become a gate signal $h$ by the inverter 21. The gate signal $h$ is "H" during the vertical blanking periods and supplied to the phase coincidence detector 22. Further, a video signal $i$ reproduced from the magnetic tape 4 by the rotating heads 1 and 2 is supplied to the envelop detector 13 which produces an envelop signal $j$. This envelop signal $j$ is supplied to the waveform shaper 19 which produces an output signal $k$ representing portions in which the envelop signal $j$ has a lower level than a predetermined threshold value, that is, a noise bar. The output signal $k$ is supplied to the phase coincidence detector 22 and the signal detector 24.

The delay circuit 23 produces a delay signal $f$ which is delayed a period $\tau$ from the output signal $e$ of the phase synchronous circuit 15. The delay signal $f$ is supplied to the signal detector 24. The delay period $\tau$ is equal to a period between the leading edge of the output signal $e$ and the stop timing of the magnetic tape.

The phase coincidence detector 22 and the signal detector 24 are constructed by AND gates, respectively. The phase coincidence detector 22 generates a reset signal $m$, when both of the gate signal $h$ and the output signal $k$ are "H", that is, the reset signal $m$ represents $h \cdot k$. The reset signal $m$ resets the flip flop circuit 25, which is constructed by a RS-flip flop circuit. Further, the signal detector 24 generates a set signal $l$, when the delay signal $f$, the VBP pulse $g$ and the output signal $k$ are "H", that is, the set signal $l$ represents $f \cdot g \cdot k$. The set signal $l$ sets the flip flop circuit 25. The flip flop circuit 25 makes a Q output $n$ "L" in the reset state, and the Q output n "H" in the set state.

The switching circuit 16' connects one of the normal reproducing control circuit 8, the capstan stop circuit 9 and the slow reproducing control circuit 26 with the driving circuit 7 in response to the levels of the output signal e of the phase synchronous circuit 15 and the Q output n of the flip flop circuit 25. That is, the switching circuit 16' supplies one of control signals from the circuits 8, 9 and 26. The relation thereof is shown in the following Table 1.

Table 1

| Level of the output signal e | Level of the Q output n | Circuit connected to the driving circuit 7 | Reproduction Mode |
|---|---|---|---|
| "L" | "L" | Normal Reproducing Control Circuit 8 | Normal |
| "H" | "H" | Slow Reproducing Control Circuit 26 | Slow |
| "H" | "L" | Capstan Stop Circuit 9 | Still |

Next, the operation of the embodiment is explained by using Figs. 3 and 4. The timing of the leading edge of the RPD signals b relative to the position of the rotating head on the magnetic tape depends on types of the VTR, that is, a non-azimuth record type, a three heads type, and a four heads type. Even if the timing for one type differs from ones for the other types, only the phase shifting amounts of the phase shifters 17 and 20 are different and the remaining parts of this embodiment are the same. In the following explanation, the timing of the leading edge of the RPD signal is selected to be a little faster than the timing in which the rotating head starts to scan the part of the vertical blanking period.

Referring to Fig. 4, $T_D$ denotes one revolution period of the drum motor 3, and $B_L$, $t_c$ and $\tau$ designate the vertical blanking period, the phase shifting amount of the phase shifter 17 and a delay amount of the delay circuit 23, respectively.

$S_1$, $S_2$ and $S_3$ denote a normal speed run state of the magnetic tape 4, a stop state thereof and a slow speed run state thereof, respectively, that is, indicate a normal reproduction mode, a still reproduction mode and a slow reproduction mode, respectively.

Now, in the normal reproduction mode, the timing signal $c$ is supplied to the phase synchronous circuit 15 and the command signal $d$ is not supplied to the phase synchronous circuit 15 so that the output signal $e$ is "L". Further, the flip flop circuit 25 has been made to the reset state by an appropriate means, which is not shown in Fig. 3, at an initial state, that is, at a start timing, and the delay signal $f$ from the delay circuit 23 is "L", so that the signal detector 24 does not generate the set signal $l$ and the Q output $n$ of the flip flop circuit 25 holds "L". Therefore, as apparently from Table 1, the switching circuit 16' is connecting the normal reproducing control circuit 8 to the driving circuit 7, the control signal from the circuit 8 is supplied, and the magnetic tape 4 stays in the normal speed run state $S_1$.

Here, as the command signal $d$ is supplied to the phase synchronous circuit 15 from the input terminal 10 at the timing $t_0$, the output signal $e$ of the phase synchronous circuit 15 becomes "H" at the timing $t_1$, that is, the leading edge of the first timing signal $c$ after the timing

- 10 -

$t_0$. At the same time, the flip flop circuit 25 becomes the reset state and the Q output $n$ becomes "L" so that the switching circuit 16' connects the capstan stop circuit 9 with the driving circuit 7 as shown in Table 1 and the control signal from the circuit 9 is supplied to the circuit 7.

Then, the magnetic tape 4 rapidly switches over to the stop state, but does not stop in a moment because of the inertia of the capstan motor 6. In consideration of the inertia thereof, the phase shifting amount $t_c$ of the phase shifter 17 is determined as the magnetic tape 4 stops at the timing after the period $\tau$ has passed from the timing $t_1$. So, in some cases, the magnetic tape 4 may stop at the timing $t_2$ exactly delayed the period $\tau$ from the timing $t_1$, and in other cases, it may stop at the timing $t'_2$ delayed more than the period $\tau$ from the timing $t_1$ because of different causes.

First, the case in which the magnetic tape 4 stops at the timing $t_2$ will be explained, although the waveforms for this case are not shown in Fig. 4. After the magnetic tape 4 stops at the timing $t_2$, the rotating heads 1 and 2 exactly scan a certain track on the magnetic tape 4 in the best condition, so that the output signal $k$ exactly superimposes in the VBP pulse $g$ from the phase shifter 20, and the gate signal $h$ exactly superimposes in the output signal $k$. Therefore, the phase coincidence detector 22 supplies the reset signal $m$ to the flip flop circuit 25.

On the other hand, the output signal $e$ of the phase synchronous circuit 15 is delayed the period $\tau$ by the delay circuit 23 and the delay signal $f$ being "H" is supplied to the signal detector 24. So, the signal detector 24 is switched on from the timing $t_2$, that is, the leading edge of the delay signal $f$. However, the VBP pulse $g$ is "L" and the noise bar signal $k$ exactly superimposes in the VBP pulse $g$ so that the signal detector 24 does not generate

the set signal $\underline{l}$. So, the flip flop circuit 25 hold the reset state, the Q output $\underline{n}$ is "L" and the magnetic tape 4 is in the stop state $S_2$, so that the noiseless still reproduction picture can be obtained.

Next, the case in which the magnetic tape 4 stops at the timing $t_2'$ by some reasons will be explained. Fig. 4 shows the timing chart of this case. The magnetic tape 4 becomes the stop state $S_2$ from the timing $t_2'$ , and the rotating heads 1 and 2 inaccurately scan a certain track on the magnetic tape 4. So, the rotating heads 1 and 2 are the most apart from the track at the different position from the record part of the vertical blanking period. As a result, the phase of the output signal $\underline{k}$ does not completely coincide with one of the VBP pulses.

On the other hand, the output signal $\underline{e}$ of the phase synchronous circuit 15 is delayed the period $\tau$ by the delay circuit 23, and supplied to the signal detector 24 as the delay signal $\underline{f}$. Therefore, the signal detector 24 is switched on from the timing $t_2$, that is, the leading edge of the delay signal $\underline{f}$. The $\overline{VBP}$ pulses $\underline{g}$ being "L" supplied after that do not coincide with the output sinals $\underline{k}$ being "H", so that the signal detector 24 generates the set signals $\underline{l}$. However, the phase coincidence detector 22 does not generate the reset signals $\underline{m}$, so that the flip flop circuit 25 becomes the set state and the Q output $\underline{n}$ becomes "H".

Then, apparently from Table 1, the switching circuit 16´ connects the slow reproducing control circuit 26 with the driving circuit 7, and the magnetic tape 4 becomes the slow speed run state from the timing $t_3$. As the magnetic tape 4 starts to run slowly, the rotating heads 1 and 2 gradually become to scan the certain track on the magnetic tape 4 in the best condition. At the same time, the VBP pulses $\underline{g}$ gradually become to coincide with the output signals $\underline{k}$, so that the phase coincidence detector 22 generates the reset signal $\underline{m}$ at the timing in which the gate signal $h$ superimposes in the output signal $k$, but the signal detector 24 generates the set signal $l$ at the timing in which the output signals $k$ do not superimpose the VBP pulses $g$. So, although the flip flop circuit 25 stays at the reset state in a moment, the magnetic tape 4 can continue to run slowly as before.

Finally, the rotating heads 1 and 2 scan the certain track in the best condition and the VBP pulse $g$ exactly superimposes the output signal $k$ at the timing $t_4$, so that the signal detector 24 does not generate the set signals $l$ and only the phase coincidence detector 22 generates the reset signals $m$. So, flip flop circuit 25 becomes the reset state and the Q output $n$ becomes "L", and the switching circuit 16′ connects the capstan stop circuit 9 with the driving circuit 7. As a result, the magnetic tape 4 becomes the stop state $S_2$ after the timing $t_4$.

As described above, the rotating heads 1 and 2 scan the track in the best condition, so that the noiseless still reproduction picture can be obtained. Further, as the normal reproduction mode is commanded, the command signal $d$ for the still reproduction becomes "L", the signal detector 24 is switched off and the flip flop circuit 25 holds the reset state, so that switching circuit 16′ connects the normal reproducing control circuit 8 with the driving circuit 7. As a result, the magnetic tape 4 starts to run normally.

As apparently from the above explanation, in this invention, with the command for the still reproduction picture, the rotating heads become to scan the certain track in the best condition and the noiseless still picture can be obtained within the very short period, for example, one cycle of the drum motor and even if the rotaing heads scan the certain track in the condition which is off the best condition, the condition can be surely detected and automatically transferred to the best condition. Further, in the latter case, as the magnetic tape is transferred to the stop state through the slow speed run state, it is possible to surely obtain the best condition and the period in which the magnetic tape stays at the slow speed run state is very short in comparison with the width of the track. Therefore, in either case, it is possible to obtain the fine reproduction picture rapidly after the input of the command signal.

Further, in this invention, as the signal detector 30 is switched on by the delay signal $f$ of the delay circuit 29, the decision of whether the magnetic tape is stopped or not is made after the timing in which the magnetic tape should stop. Therefore, there is no mistake in the decision of whether the stop point of the magnetic tape is good or not and a malfunction caused by a drop out does not occur in the normal reproduction mode.

Meanwhile, in Fig. 3, it is possible to supply the delay signal $f$ from the delay circuit 23 with the phase coincidence detector 22 and to control the phase coincidence detector 22 by the delay signal $f$ like as the signal detector 24. As mentioned before, there are many types of the VTR in the market, and this invention can be applied to all of them. In general, in the consumer VTR, and azimuth record type is adopted and guard bands are not arranged between the adjacent tracks. In this type VTR, the azimuth angles of the rotating heads are different from each other, and another rotating heads for the still reproduction picture are used. In the three heads type, one rotating head for the still reproduction picture is attached, and in the four heads type, two rotating heads for the still reproduction picture are used. In the former, the rotating head for the still reproduction has the same azimuth angle as one of the rotating heads 1 and 2 does, for example, the rotating head 2 does, and is fastened near the rotating head 1. In the still reproduction mode, the rotating head 2 and the rotating head for the still reproduction alterately scan the same track. Therefore, the leading edges of the RPD signals b regulate the coincidence between the rotating head 2 and one of the tracks having a magnetized direction corresponding to the azimuth angle of the rotating head 2, so that the rotating head 2 and the rotating head for the still reproduction can scan one of the tracks having the corresponding azimuth direction. The stop timing of the magnetic·tape from the normal reproduction mode to the still reproduction mode is the same as the above mentioned embodiment.

On the other hand, in the latter, the two rotating heads for the still reproduction are fastened in 180° angle apart from each other, and, for example, 90° angle apart from the rotating heads 1 and 2. Both of them have the same azimuth angle as one of the rotating heads 1 and 2 does, for example the rotating head 2 does. So, one of the rotating heads for the still reproduction goes ahead of the rotating head 1 and another goes ahead of the rotating head 2. When both of the rotating heads for the still reproduction are arranged in the same plane as the rotating heads 1 and 2 exist, traces of the rotating heads for the still reproduction are a half of the track pitch apart from the traces of the rotating heads 1 and 2 in the normal reproduction mode. However, the traces of the rotating heads for the still reproduction coincide with the traces of the rotating heads in the still reproduction, so that the stop timing from the normal reproduction mode to the still reproduction mode is the same as the above described embodiment. In the case that the rotating heads for the still reproduction mode are attached apart from the plane in which the rotating heads 1 and 2 exist, the traces of the rotating heads for the still reproduction are apart from the traces of the rotating heads 1 and 2 in the still reproduction mode, it is necessary to set the phase shifting amount for stopping the magnetic tape at the timing in which one of the rotating heads for the still reproduction locates in the center of the track

0129055

in the longitudinal direction.

<u>C L A I M S</u>

1. A method for controlling a still reproduction of a video tape recorder which includes rotating heads attached to a rotating drum for reproducing a video signal from a magnetic tape and a capstan for feeding the magnetic tape, the method comprising the steps of: detecting rotating phase signals indicative of the rotating phase of the rotating heads; stopping the capstan in response to said rotating phase signals generated after receiving a command signal for the still reproduction; detecting whether a noise bar exists within vertical blanking periods or not; rotating the capstan for feeding the magnetic tape at a slow speed in the case that said noise bar does not exist within said vertical blanking periods; and stopping the capstan, when said noise bar gets into said vertical blanking periods.

2. A method according to claim 1, wherein said rotating phase signals are rotating phase detecting signals which indicate a rotating phase of the rotating drum.

3. A method according to claim 2, further comprising the step of phase shifting said rotating phase detecting signals in consideration of an inertial moment of a motor for rotating the capstan.

4. An apparatus for controlling a still reproduction of a helical scan type video tape recorder which includes a rotating drum, rotating heads attached to the rotating drum for reproducing a video signal from a magnetic tape, a capstan for feeding the magnetic tape, a capstan motor for rotating the capstan and a driving circuit for the capstan motor, the apparatus comprising:

first detecting means for detecting rotating phase signals indicative of the rotating phase of the rotating heads generated after a command signal for the still reproduction; second detecting means for detecting whether a noise bar exists within vertical blanking periods or not; and switching means for providing one of control signals corresponding to a normal reproduction mode, a slow reproduction mode and a still reproduction mode to the driving circuit, in response to output signals of said first detecting means and said second detecting means.

5. An apparatus according to claim 4, wherein said switching means provides the control signal corresponding to the still reproduction mode in response to said output signal of said first detecting means.

6. An apparatus according to claim 5, wherein said switching means provides the control signal corresponding to the slow reproduction mode in the case that said output signal of said second detecting means indicates that the noise bar does not exist within the vertical blanking periods, and provides the control signal corresponding to the still reproduction mode when the noise bar gets into the vertical blanking periods.

FIG. 1

FIG. 2

**FIG. 3**

# FIG. 4